# DEMANDE DE BREVET EUROPEEN

(11) **EP 2 369 487 A1**
(43) Date de publication de la demande: **28.09.2011**
(21) Numéro de dépôt: 11157039.6
(22) Date de dépôt: 04.03.2011
(51) Int. Cl.: G06F 11/263

(54) **Dispositif de test d'une architecture de calcul multitâches et procédé de test correspondant.**

(30) Priorité: 11.03.2010 FR 1051761
(71) Demandeur: STMicroelectronics (Grenoble 2) SAS, 38000 Grenoble (FR)
(72) Inventeur: De Poy Alonso, Iker, 38400, SAINT MARTIN D'HERES (FR)
(74) Mandataire: Delprat, Olivier

(57) **Abrégé**

Ce dispositif de test d'une architecture de calcul multitâches comporte des moyens de génération de séquences d'instructions de test correspondant à des règles de programmation de l'architecture de calcul et des moyens de contrôle de l'exécution des séquences d'instructions de sorte que lesdites séquences soient alternativement exécutées au sein de l'architecture de calcul.

## Description

L'invention concerne, de manière générale, les architectures de calcul multitâches, et se rapporte tout particulièrement à un dispositif et à un procédé de test d'une telle architecture.

Par architectures de calcul multitâches, on entend, dans le cadre de la présente description, des architectures capables de réaliser alternativement plusieurs instructions. Ainsi, l'invention s'applique en particulier, mais de manière non limitative, à tout type d'architectures multitâches, telles que les architectures utilisant les technologies VLIW (« Very Long Instruction Word », en anglais), selon lesquelles chaque mot est susceptible de contenir plusieurs instructions, les architectures multifiles, généralement connues sous la dénomination anglaise « Multithreading », selon lesquelles un calculateur est capable de traiter alternativement plusieurs files d'instructions, les architectures SIMD (« Single Instruction On Multiple Data », en langue anglaise) selon lesquelles un calculateur comporte plusieurs unités de calcul fonctionnant en parallèle, les architectures en virgule flottante...

Pour procéder au test de telles architectures de calcul multitâches, il est généralement souhaitable d'effectuer plusieurs instructions de test en utilisant des techniques de simulation.

Tout d'abord, des tests doivent être exécutés sur le simulateur de jeu d'instructions (« Instruction Set Simulator » ou ISS, en langue anglaise), puis au niveau des transferts de registre puis, enfin, sur la version finale synthétisée du processeur tel que mis en oeuvre sur circuit logique programmable.

De tels tests sont destinés à identifier différents niveaux de défaillance qui sont susceptibles d'apparaître au sein de l'architecture. Ils sont également destinés à identifier des défaillances au sein du compilateur, en particulier en ce qui concerne les instructions, leur syntaxe, leur sémantique, ...

Ils doivent par ailleurs être susceptibles de couvrir un maximum, voire l'ensemble des scénarios multitâches susceptibles d'être mis en oeuvre au sein de l'architecture.

Il existe déjà, dans l'état de la technique, des dispositifs de test d'architectures de calcul. La société OBSIDIAN propose, à cet égard, un outil de test commercialisé sous la dénomination Raven^{®}. On pourra également se référer à l'outil de test dénommé Genesys^{®}, commercialisé par la société IBM, qui offre un outil de génération de test dynamique et configurable.

Il a été cependant constaté que les outils de test actuellement disponibles ne peuvent être utilisés que par des spécialistes des architectures de traitement multitâches, et sont longs et fastidieux à utiliser. En outre, ils ne sont pas parfaitement adaptés aux tests d'architectures de traitement multitâches. Ils sont enfin relativement coûteux.

Il est donc proposé, selon la présente description, un dispositif de test d'une architecture de calcul multitâches, qui, selon une caractéristique générale, comprend des moyens de génération de séquences d'instructions de test correspondant à des règles de programmation de l'architecture de calcul, et des moyens de contrôle de l'exécution des séquences d'instructions, de sorte que lesdites séquences soient alternativement exécutées au sein de l'architecture de calcul.

Selon une autre caractéristique, ce dispositif de test peut comporter des moyens de synchronisation pour le contrôle de l'exécution alternative des séquences d'instructions.

Il peut encore comporter des moyens de mémorisation pour le stockage d'une représentation de l'architecture de calcul à tester.

Par exemple, ce dispositif comporte des moyens de mémorisation pour le stockage d'une description des instructions de programmation de l'architecture de calcul.

Selon un autre aspect, il est également proposé un procédé de test d'une architecture multitâches.

Selon une caractéristique générale, ce procédé de test comprend les étapes de :
- élaboration de séquences d'instructions de test correspondant à des règles de programmation de l'architecture de calcul ; et
- exécution des séquences d'instructions de test de sorte que lesdites séquences soient alternativement exécutées au sein de l'architecture de calcul.

Dans un mode de mise en oeuvre, l'exécution en parallèle des séquences d'instructions de test est effectuée par étapes entre deux point de synchronisation consécutifs, jusqu'à un point de sortie, chaque étape comprenant :
- une exécution d'une première séquence d'instructions jusqu'à ce qu'un premier point de synchronisation soit atteint, puis
- exécution successive de séquences d'instructions consécutives, chaque séquence d'instructions étant exécutée jusqu'à ce que ledit point de synchronisation soit atteint pour ladite séquence.

On peut prévoir que le nombre de points de synchronisation soit identique pour chaque séquence d'instructions de test.

Les séquences de test peuvent être choisies aléatoirement.

Il est enfin proposé, selon un troisième aspect, une architecture de calcul multitâches comprenant un dispositif de test tel que défini ci-dessus.

D'autres buts, caractéristiques et avantages de l'invention apparaîtront à la lecture de la description suivante, donnée uniquement à titre d'exemple non limitatif, et faite en référence aux dessins annexés, sur lesquels :
- la figure 1 illustre l'architecture générale d'un dispositif de test selon le premier aspect mentionné ci-dessus ;
- la figure 2 est un schéma illustrant un mécanisme de synchronisation des instructions de test ; et
- la figure 3 illustre un autre mode de mise en oeuvre du mécanisme de synchronisation des instructions de test.

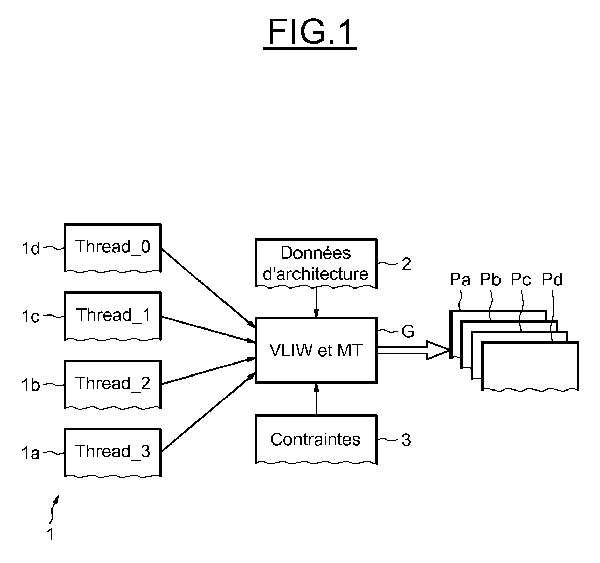

On va tout d'abord décrire, en référence à la figure 1, l'architecture générale d'un dispositif de test d'une architecture de calcul multitâches. Une telle architecture est également connue sous le terme d'architecture multi-files ou de « multi-thread », en anglais.

Ce dispositif est destiné à élaborer, de manière aléatoire, un nombre indéterminé de séquences de test Pa, Pb, ...Pd modulo n, n étant le nombre de files de calcul d'une architecture multi-files. L'objectif est ici de générer une séquence d'instructions de test par file de l'architecture multi-files, l'ensemble de ces n séquences constituant un test multi-files. Il s'agit donc en d'autres termes de créer un ensemble de séquences de tests assurant le test de l'ensemble des tâches exécutées par une architecture multi-tâches.

Un tel dispositif permet à l'utilisateur, par exemple un concepteur de circuits, un contrôleur de qualité, ... de procéder à des tests directement sélectionnés ou, au contraire, aléatoirement. Toutefois, les tests mis en oeuvre sont fondés sur l'exécution de programmes de tests élaborés selon les règles de programmation de l'architecture de calcul et, en fonction de l'architecture du calculateur à contrôler.

Lorsque l'utilisateur procède à un test non aléatoire, il sélectionne le type et le format des instructions et la valeur opérande des séquences de test. Au contraire, lorsque les tests sont réalisés de façon aléatoire, ces valeurs sont choisies aléatoirement par le dispositif de test.

Comme le montre la figure 1, le dispositif comprend essentiellement des moyens 1 de génération de séquences d'instructions de test.

Ces moyens 1 sont essentiellement constitués par des moyens de stockage 1a, 1b, 1c et 1d de séquences de test *Thread_0, ..., Thread_3* correspondant chacune à des scénarios de tests, et constituées par des fichiers textes relativement simples utilisant des macroprogrammes paramétrables. Chaque scénario permet de fournir un grand nombre de tests générés aléatoirement par rapport à des contraintes de scénario.

Le dispositif comporte encore des seconds moyens de mémorisation 2 pour le stockage d'une représentation de l'architecture de calcul à tester, et pour la mémorisation de paramètres descriptifs des instructions de programmation de l'architecture de calcul à tester, et un générateur de programme de test G servant à l'élaboration des programmes de test en fonction des règles de programmation de l'architecture à contrôler.

Ainsi, à partir des scénarios de test stockés dans les premiers moyens de mémorisation 1, et en fonction de la description des instructions de programmation de l'architecture à tester, il est procédé à l'élaboration d'un ensemble de séquences de test proprement dites en sélectionnant automatiquement des codes d'opération (« Op-codes ») et des opérandes pour les instructions de test. Cette sélection s'effectue toutefois sous le contrôle de contraintes stockées dans des troisièmes moyens de mémorisation 3. Ces contraintes correspondent à des directives qui sont susceptibles d'influencer l'ensemble des valeurs possibles pour les codes d'opération et pour les opérandes que le dispositif de test est susceptible de générer. On notera que plus ces contraintes sont élevées, plus les tests sont sélectifs.

Ainsi, le générateur de tests G construit l'ensemble de fichiers de programmes Pa, Pb, Pc et Pd à partir des scénarios de tests 1a, 1b, 1c et 1d, à partir de la description de l'architecture à tester et du jeu d'instructions de cette architecture, mémorisées dans les deuxièmes moyens de mémorisation 2, et en fonction des contraintes stockées dans les troisièmes moyens de mémorisation.

Ces fichiers de programmation Pa, Pb, Pc et Pd correspondent chacun à une séquence d'instructions de test programmée en langage bas niveau et susceptible dès lors d'être immédiatement exécutée au sein de l'architecture A.

On notera toutefois que, comme mentionné précédemment, l'architecture de calcul à tester est une architecture multitâches, susceptible de réaliser un ensemble de tâches qui peuvent, souvent, partager une même mémoire.

Ainsi, afin de pouvoir utiliser des adresses mémoires préalablement chargées pour la mise en oeuvre d'un premier fichier test, pour l'exécution d'autres fichiers tests, le dispositif réalise en parallèle et de manière alternée les séquences d'instructions de test et met en outre en oeuvre un mécanisme de synchronisation définissant des points d'arrêt intermédiaires pour les séquences de test.

Ce mécanisme de synchronisation est par exemple exécuté au sein du générateur de test G qui incorpore des moyens de contrôle de l'exécution des instructions de test permettant de mettre en oeuvre cette synchronisation.

Ces points d'attente sont utilisés pour arrêter l'exécution d'une séquence de test en vue d'attendre que les autres séquences de test aient été réalisées pour les autres files de calcul de l'architecture de calcul multitâches.

On notera que le nombre de points d'attente est identique pour toutes les files de calcul. En outre, entre deux points de synchronisation consécutifs, il n'est pas prévu d'interaction entre les zones mémoire de différentes files de calcul.

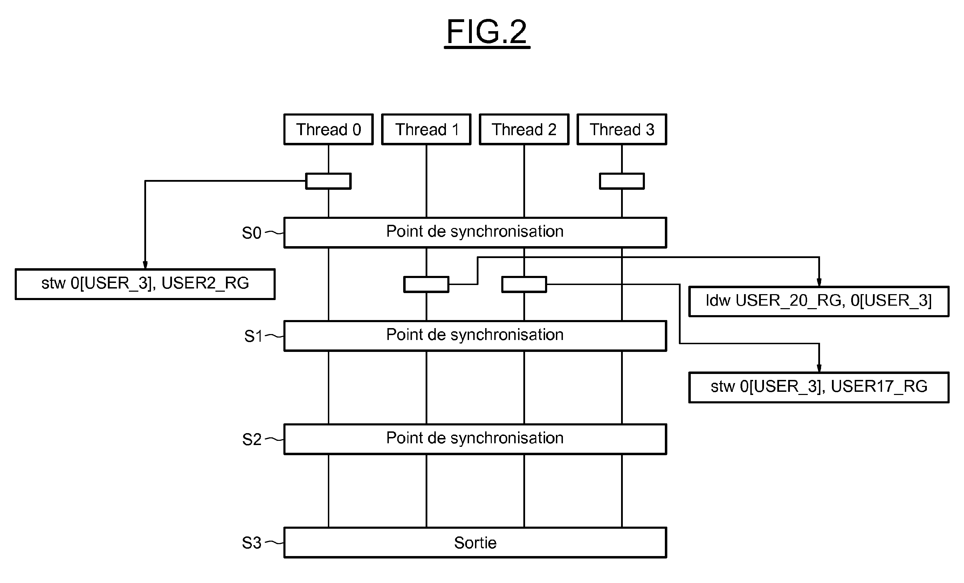

On se référera à la figure 2, qui illustre quatre files de calcul *Thread_0, Thread_1, Thread_2* et *Thread_3,* d'une architecture multi-tâches.

Pour procéder au test de cette architecture, il convient tout d'abord de procéder à une étape proprement dite de génération de séquences d'instructions pour chaque file, et ce avec des contraintes liées à l'utilisation des ressources partagées par ces files, et à la détermination de points de synchronisation. Par exemple, les ressources partagées concernent ici une mémoire partagée entre les fils de calcul mais, bien entendu, de telles ressources peuvent être étendues à d'autres éléments, tels que des registres de blocs fonctionnels basés en mémoire.

Le test de l'architecture implique également une étape d'exécution des séquences entre les points de synchronisation communs.

On notera que la génération des séquences d'instructions est faite de telle sorte que si une séquence d'instructions affectée à une file utilise une ressource partagée avec les autres séquences d'instructions affectées aux autres files, cette ressource devient la propriété exclusive de cette séquence d'instructions jusqu'à ce que l'ensemble des séquences d'instructions de chaque file atteigne un point de synchronisation commun.

Dans l'exemple de la figure 2, la séquence d'instruction affectée à la première file *Thread_0* utilise des adresses-mémoire en lecture. Ainsi, les séquences d'instructions générées pour les autres files ne pourront en aucun cas utiliser ces mêmes adresses-mémoire.

Tel est en particulier le cas pour la dernière file *Thread_3* qui fait référence en lecture et/ou en écriture à l'adresse utilisée par la séquence d'instructions de la première file *Thread_0.* Cette génération d'instructions est impossible et les générateurs prendront en compte cette contrainte en interdisant toute référence à des zones-mémoire utilisées par chacune des autres files.

On notera que les points de synchronisation sont définis par le générateur de séquences d'instructions. Lorsque les séquences d'instructions ont toutes atteint un point de synchronisation, les ressources privées de chacune des séquences sont relaxées et deviennent utilisables pour chacune des séquences d'instructions affectées aux files en respectant les mêmes contraintes définies précédemment.

Ainsi, dans l'exemple illustré à la figure 2, après le franchissement du premier point de synchronisation S0, les séquences d'instructions affectées aux deuxième et troisième files *Thread_1* et *Thread_2* peuvent de nouveau utiliser tant en lecture qu'en écriture les ressources affectées à la séquence d'instructions de la première file *Thread_0* avant le franchissement du premier point de synchronisation S0. Cependant, si la séquence d'instructions de la deuxième file *Thread_1* utilise cette ressource en écriture, alors elle deviendra sa propriété exclusive et ne pourra en aucun cas être utilisée de quelque manière que ce soit pour toute séquence d'instructions affectée aux autres files *Thread_0, Thread_2* et *Thread_3.*

Si, dans l'autre cas, la séquence d'instructions de la deuxième file *Thread_1* utilise cette ressource en lecture, alors elle continuera de rester disponible en lecture pour les autres séquences d'instructions affectées aux autres files *Thread_0, Thread_2* et *Thread_3.*

Ainsi, une séquence d'instructions devient la propriété exclusive d'une ressource partagée si et seulement si elle effectue une opération d'écriture.

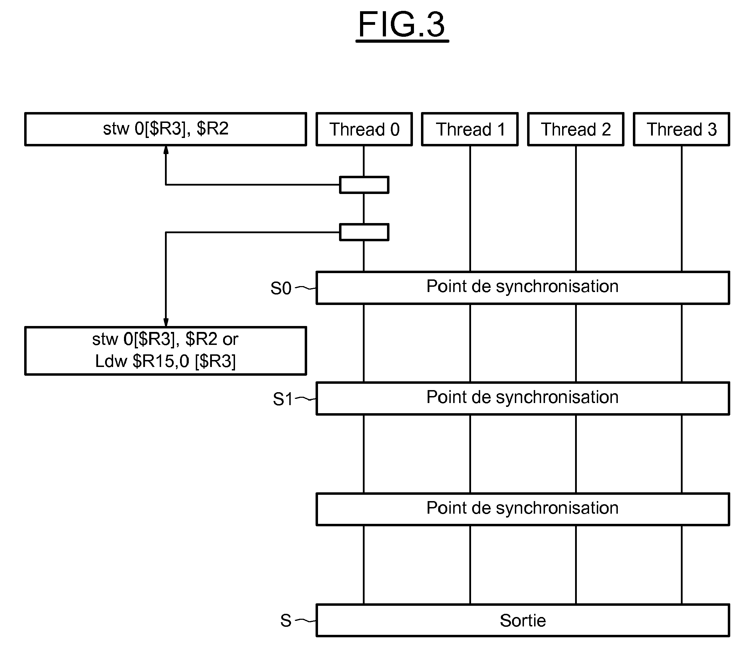

Cette contrainte est illustrée à la figure 3 qui montre que lorsque les ressources-mémoire partagées sont utilisées en écriture par les instructions affectées à la première file *Thread_0,* ces ressources ne peuvent être utilisées par les autres files de calcul *Thread_1, Thread_2* et *Thread_3.*

Enfin, dans le cas où une séquence d'instructions est affectée à une file et réalise une lecture d'une ressource partagée, cette ressource ne peut plus être modifiée pendant l'exécution des instructions de lecture entre deux points de synchronisation. En effet, l'exécution future des séquences d'instructions affectées aux files se fait de manière aléatoire. En conséquence, il serait possible d'avoir une opération d'écriture avant une opération de lecture, modifiant ainsi la valeur attendue. Par ailleurs, dans le cadre de l'exécution des séquences de test, il n'est pas prévu d'anticiper l'ordre dans lequel ces séquences sont exécutées. Par conséquent, l'arbitrage des conflits d'accès à des ressources partagées est opéré par l'introduction des points de synchronisation et l'exécution des instructions entre ces points, comme décrit précédemment.

En se référant à la figure 3, on notera que le générateur de tests peut utiliser des zones d'adresses mémoire préalablement initialisées par la même file de calcul.

On notera enfin que les séquences d'instructions de tests sont réalisées de manière alternative d'un point de synchronisation à un autre, jusqu'à un point de sortie S au niveau duquel une séquence de sortie écrite pour chaque file de calcul effectue un test de vérification de la mémoire et des registres.

Toutefois chaque file de calcul procède à la vérification de ses propres registres utilisés au cours du test. Mais seule l'une des files de calcul procède à la vérification de la mémoire puisque, au cours de la procédure de test, la mémoire est partagée pour l'ensemble des séquences d'instructions de tests.

On notera enfin que, par exemple, un procédé de test d'une architecture de calcul multitâches peut être réalisé au moyen des codes d'instructions suivants :

```
"ST_TEST_TEMPLATE :
             DATA_SEQUENCE :num_instr="5"
     INSTRUCTIONS_SEQUENCES{
       CODE_THREAD_0{
             INIT_SEQUENCE {num_instr=[ 10.. 10]};
     INIT_IF;
       SEQ_ARITH {num_instr=[5..10]};
     ELSE;
       SEQ_LD_ST {num_instr=[(5..10]};
       INIT_FOR {num_iter=[10.. 100]};
             SEQ_ARITH {num_instr=[5..5]};
       END_FOR;
  END_IF;
  SYNCHRO;
  INIT_FOR {num_iter=[10..100]};
       SEQ_ARITH {num_instr=[5..5]};
       INIT_FOR {num_iter=[10.. 100]};
             SEQ_ARITH {num_instr=[5..5]} ;
      END_FOR;
 END_FOR;
 SYNCHRO;
 SEQ_LD_ST {num_instr=[5 ..10]};
 EXIT;
 };
 CODE THREAD_1 {
             INIT_SEQUENCE {num_instr=[10..10]};
             SEQ_ARITH {num_instr=[5..10]};
             SYNCHRO
             SEQ_LD_ST {num_instr=[5..10]};
             SYNCHRO
             SEQ_LD_ST {num_instr=[5..10]};
             EXIT;
             };
  CODE_THREAD_2 {
             INIT_SEQUENCE {num_instr=[10.. 10]};
             SEQ_LD_ST {num_instr=[5..10]};
             SYNCHRO
             SEQ_ARITH {num_instr=[5..10]};
             SYNCHRO
             SEQ_LD_ST {num_instr=[5..10]};
             EXIT;
             };
  CODE_THREAD_3 {
            INIT_SEQUENCE {num_instr=[10..10]};
             SEQ_LD_ST {num_instr=[5..10]};
             SYNCHRO
             SEQ_ARITH {num_instr=[5..10]};
             SYNCHRO
             SEQ_ARITH {num_instr=[15..15]} ;
             EXIT;
             };
      };"
```

## Revendications

1. Dispositif de test d'une architecture de calcul multitâches, **caractérisé en ce qu'**il comporte des moyens (G) de génération de séquences d'instructions de test correspondant à des règles de programmation de l'architecture de calcul et des moyens de contrôle de l'exécution en parallèle des séquences d'instruction de sorte que lesdites séquences soient alternativement exécutées au sein de l'architecture de calcul.

2. Dispositif selon la revendication 1, **caractérisé en ce qu'**il comporte des moyens de synchronisation pour le contrôle de l'exécution alternative des séquences d'instruction.

3. Dispositif selon l'une des revendications 1 et 2, **caractérisé en ce qu'**il comporte des moyens de mémorisation (2) pour le stockage d'une représentation d'architecture de calcul à tester.

4. Dispositif selon l'une quelconque des revendications 1 à 3, **caractérisé en ce qu'**il comporte des moyens de mémorisation pour le stockage d'une description des instructions de programmation de l'architecture de calcul.

5. Procédé de test d'une architecture de calcul multitâches, **caractérisé en ce qu'**il comprend les étapes de :
- élaboration de séquences d'instructions de test correspondant à des règles de programmation de l'architecture de calcul ; et
- exécution des séquences d'instructions de test de sorte que lesdites séquences soient alternativement exécutées au sein de l'architecture de calcul.

6. Procédé selon la revendication 5, **caractérisé en ce que** l'exécution des séquences d'instructions de test est effectuée par étapes entre deux points de synchronisation successifs jusqu'à un point de sortie, chaque étape comprenant :
- une exécution d'une première séquence d'instructions jusqu'à ce qu'un premier point de synchronisation soit atteint, et
- exécutions successives de séquences d'instruction consécutives, chaque séquence d'instruction étant exécutée jusqu'à ce que ledit premier point de synchronisation soit atteint pour ladite séquence.

7. Procédé selon la revendication 6, **caractérisé en ce que** l'on prévoit un nombre de points de synchronisation identiques pour chaque séquence d'instructions de test.

8. Procédé selon l'une quelconque des revendications 5 à 7, **caractérisé en ce que** les séquences de tests sont choisies aléatoirement.

9. Architecture de calcul multitâches, **caractérisée en ce qu'**elle comporte un dispositif de test selon l'une quelconque des revendications 1 à 4.
